## Europäisches Patentamt

## European Patent Office

## Office européen des brevets

(19)

(11) Numéro de publication: **0 241 624**
**B1**

(12)

# FASCICULE DE BREVET EUROPEEN

(45) Date de publication du fascicule du brevet:
27.12.90

(21) Numéro de dépôt: 86460005.1

(22) Date de dépôt: 16.04.86

(51) Int. Cl.⁵: **F16L 39/04, F16K 11/074**

(54) Raccords commutateurs rotatifs.

(43) Date de publication de la demande:
21.10.87 Bulletin 87/43

(45) Mention de la délivrance du brevet:
27.12.90 Bulletin 90/52

(84) Etats contractants désignés:
DE GB

(56) Documents cités:
FR-A- 1 139 930
FR-A- 2 330 933
GB-A- 928 299
GB-A- 2 132 296
US-A- 2 089 943

(73) Titulaire: Legris-Société Anonyme dite, 29, rue de la Palestine, F-35014 Rennes Cedex(FR)

(72) Inventeur: Levenez, Yves, 57 rue de La Baste, F-77000 Vaux le Penil(FR)

(74) Mandataire: Dubreuil, Annie, Cabinet DUBREUIL Le Suffren 23 rue des Peupliers, F-56100 Lorient(FR)

ACTORUM AG

## Description

Les raccords utilisés dans les techniques des fluides et notamment les techniques pneumatiques, ne permettent la déconnexion des tuyauteries que dans la mesure où celles-ci ont préalablement été vidées de leur pression. L'élément de raccordement du type «coupleur» autorise plus facilement cette déconnexion sous pression, grâce à un clapet incorporé obturant automatiquement la veine de fluide amont par l'effet de sa pression; la nécessité d'équiper la tuyauterie aval d'un embout approprié et le fait qu'étant désaccouplée elle est alors libre de toute fixation limitent l'emploi des coupleurs aux tuyauteries ayant un caractère de mobilité. Dans les installations fixes et complexes, on leur préfère des vannes auxquelles sont raccordées à demeure les tuyauteries, permettant d'établir ou d'interrompre le circuit du fluide et généralement, dans ce dernier cas, en décomprimant la tuyauterie aval. Ces vannes du type bistable, mono ou multi-fonctions, à commandes manuelles par basculement d'un levier ou rotation d'un bouton, sont très utilisées en technique pneumatique pour le contrôle et l'aiguillage de signaux d'information. Elles s'avèrent, par leur complexité, d'un coût parfois élevé, tant à l'achat qu'à l'entretien, en regard de leur faible fréquence d'utilisation.

Parmi ces vannes, on peut citer celle qui est divulguée dans le documents GB-A 928 299, du type à une entrée et plusieurs sorties, et comportant un moyen de mise à l'air libre des sorties non reliées à l'entrée.

Le but de la présente invention est d'offrir un dispositif de construction robuste et simple couvrant ces besoins et qui peut s'installer à même la tuyauterie dont il assure en même temps le raccordement, soit à une autre tuyauterie, soit à l'orifice d'un composant fixe. Suivant sa fonction, il peut assurer la continuité d'une ou plusieurs veines de fluide, ou leur interruption avec vidage des circuits aval, ou différentes combinaisons des circuits amont par rapport aux circuits aval.

Conformément à l'invention, un raccord commutateur comportant, en liaison avec des orifices externes un ou plusieurs canaux d'entrée et un ou plusieurs canaux de sortie, débouchant à l'intérieur du raccord par des trous, les trous d'au moins les canaux d'entrée étant couronnés d'un joint torique de matière élastique encastré dans une cuvette de plus faible profondeur que l'épaisseur dudit joint, est caractérisé en ce qu'il est formé de deux éléments, l'un d'entrée, l'autre de sortie, contenant respectivement lesdits orifices d'entrée et de sortie et lesdits canaux d'entrée et de sortie, chaque orifice externe d'au moins un desdits éléments étant équipé d'un raccord permettant la rotation axiale sans torsion de la tuyauterie qui en part ou bien d'un filetage, et les éléments étant assemblés de façon à pouvoir tourner l'un par rapport à l'autre par un effort musculaire autour d'un axe immatériel commun, en présentant deux surfaces lisses adjacentes dans lesquelles se trouvent respectivement les trous desdits canaux d'entrée et de sortie, lesdits trous étant excentrés d'une même valeur radiale par rapport à l'axe commun de rotation des éléments, de manière à établir sélectivement, par rotation de l'un des éléments par rapport à l'autre, des liaisons étanches entre orifices d'entrée et orifices de sortie, les canaux d'entrée non reliés à un canal de sortie étant obturés par l'appui de leur joint sur une zone sans trou de la surface lisse de l'élément de sortie, et les canaux de sortie non reliés à un canal d'entrée étant à l'atmosphère à travers l'espace créé par le jeu existant entre les surfaces lisses adjacentes des deux éléments, et/ou, dans des positions de rotation déterminées, par l'intermédiaire de rainures ou canaux radiaux ouverts dans ladite surface lisse adjacente de l'élément d'entrée.

Les deux éléments du raccord sont solidement accouplés, de façon telle qu'ils puissent être entraînés en rotation manuellement l'un par rapport à l'autre et conserver les positions relatives qui leur sont ainsi données. A l'accouplement des deux éléments, chaque joint autour d'un trou interne est légèrement comprimé sur la face adjacente de l'élément opposé pour assurer l'étanchéité par rapport à l'atmosphère du canal qu'il garnit dans toutes les positions d'indexage rotatif et pendant la rotation qui entraîne son glissement sur cette face. Les orifices externes des différents canaux sont pourvus soit de filetages males ou femelles, soit de raccords intégrés dits instantanés. Les tuyauteries utilisées dans le cas de pluralité d'orifices dans chacun des éléments du raccord commutateur sont alors du type semi-rigide supportant une certaine torsion et déviation de trajectoire.

La description qui va suivre de plusieurs modèles en se référant aux dessins annexés, permettra de mieux comprendre le fonctionnement étant entendu que ces exemples ne sont donnés qu'à titre indicatifs et non limitatifs.

La Fig. I est la vue en coupe axiale d'un raccord commutateur rotatif selon l'invention, du type deux voies, permettant le raccordement d'une tuyauterie amont à son entrée à une tuyauterie aval à sa sortie, et assurant à volonté, soit la continuité bidirectionnelle de la veine de fluide, soit son interruption étanche et le vidage à l'atmosphère de la tuyauterie aval, celle-ci pouvant alors être débranchée très facilement. Ce raccord commutateur se compose d'une partie I en matière plastique comportant une jupe circulaire femelle 13 emboîtée à force dans l'embout 12 circulaire mâle de la partie 2 en métal ou en matière plastique. La jupe femelle 13 comporte un ou plusieurs reliefs annelés à profil de crochet, coopérant avec une ou plusieurs gorges de l'embout mâle 12 pour s'opposer, après encliquetage de la partie I sur la partie 2 à tout déboitement en permettant leur rotation l'une par rapport à l'autre autour de l'axe immatériel XX. Les frictions dues à ce type de montage permettent aux parties de conserver la position: qui leur est donnée par un effort musculaire de rotation. Dans la partie I, un canal 3 est en liaison avec un orifice externe 5, dans la partie 2, un canal 4 est en liaison avec un orifice externe 6, chaque orifice étant équipé de cartouches 55 et 66 dites à raccordement instantané de tuyauterie. Les orifices internes des canaux 3 et 4 débouchent dans les faces adjacentes de jonction des deux parties sur un même cercle de diamètre YY ayant pour centre l'axe de rotation XX. L'orifice interne du canal 4 est couronné d'une cuvette circulaire 7 contenant un joint torique de caoutchouc 8. La cuvette 7 est légèrement moins profonde que l'épaisseur du joint 8, lequel est comprimé sur la face lisse II de la partie I par le jeu négatif d'assemblage. Dans la position représentée sur la Fig. I, les axes des orifices 3 et 4 coïncident, permettant le passage étanche bidirectionnel du fluide de l'orifice 6 à l'orifice 5. Dans la position de la partie I distante angulairement de 180° par rapport à la position représentée, le canal 3 serait amené en coïncidence avec une rainure ou un canal radial 10 dans la partie 2, cette rainure 10 se trouvant alors dans le prolongement d'un trou 9 pratiqué dans la paroi de la jupe 13 sur le rayon du canal 3. L'orifice 5 serait donc en liaison avec l'atmosphère et l'orifice 6 obturé de façon étanche par l'appui du joint 8 sur la face lisse II de la partie I. Le canal 6–4 équipé d'un joint 8 est réputé être le canal d'entrée du fluide et le canal 5–3 apte à se vider à l'atmosphère, être le canal de sortie.

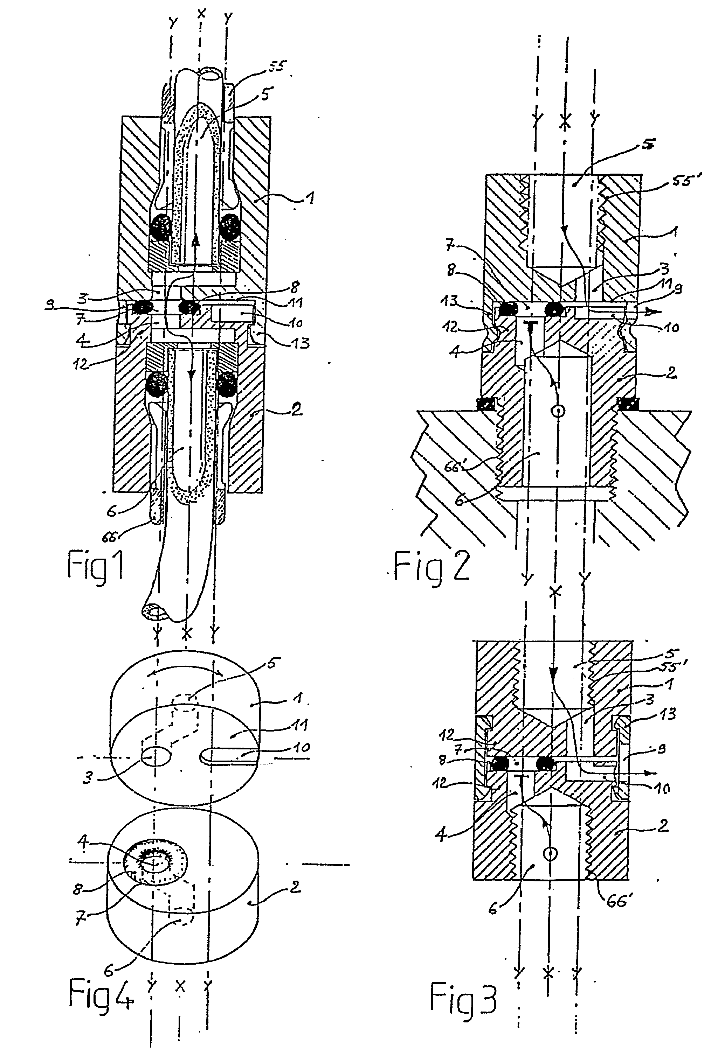

La Fig. 2 est une vue en coupe axiale d'un autre raccord commutateur rotatif du type deux voies, représenté dans la position assurant l'obturation de son entrée 6 et le vidage de sa sortie 5. L'orifice 5 comporte un filetage femelle 55' permettant le vissage d'un raccord séparé et l'orifice 6 un filetage male 66' permettant de visser le dispositif à l'orifice d'un appareil fixe; la commande de rotation se faisant exclusivement par la partie I. La jupe circulaire femelle 13 de la partie I est sertie sur l'embout mâle de la partie 2 contenant le canal d'entrée 6–4 et par conséquent le joint 8. Dans un modèle inverse de celui représenté et dans lequel l'orifice d'entrée serait l'orifice 5, le joint torique 8 serait contenu dans une cuvette 7 de la partie I et couronnant le canal 3.

La Fig. 3 est une vue en coupe axiale d'un autre raccord commutateur du type deux voies, représenté dans la position de vidage de la tuyauterie raccordée à son orifice 5. L'accouplement des deux parties I et 3 est ici réalisé au moyen d'une bague 13 en matière plastique comportant des reliefs circulaires internes en forme de crochet coopérant avec des gorges circulaires pratiquées dans les embouts males 12 identiques de chacune des parties I et 2 pour s'opposer à leur déboitement. Une série de trous 9 pratiqués à la périphérie de la bague 13 permet le vidage à l'atmosphère du canal de sortie 5–3 dans toutes les positions angulaires autres que celle assurant le passage étanche bidirectionnel du fluide caractérisé par la coïncidence axiale des canaux 3 et 4. Les orifices 5 et 6 comportent des filetages femelles 55' et 66' destinés à recevoir des éléments de raccordement classiques.

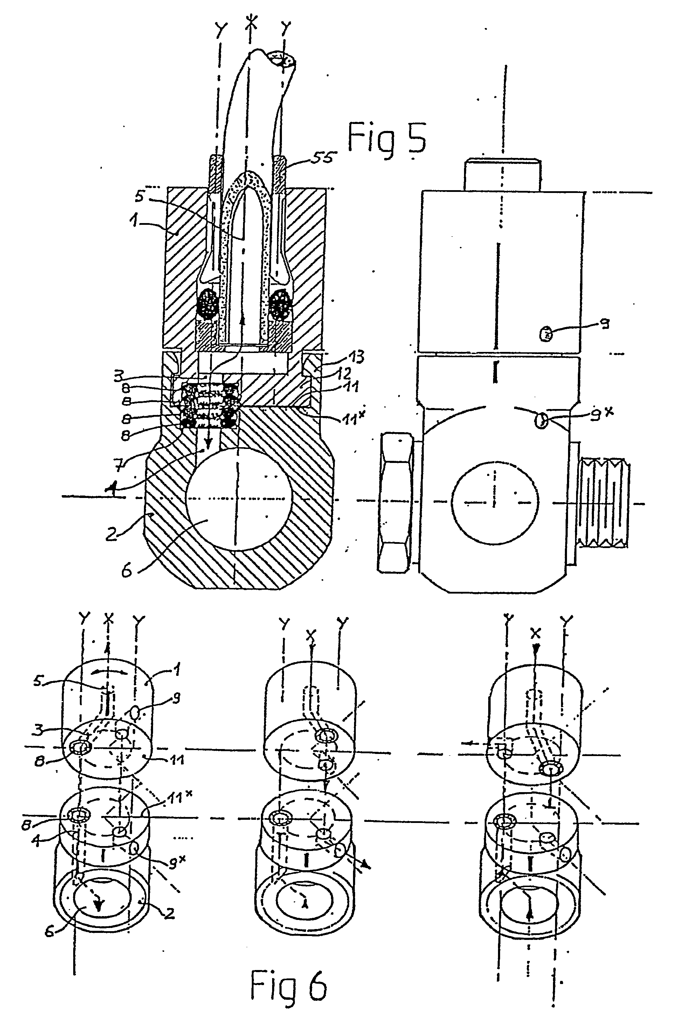

La Fig. 4 est une vue en perspective cavalière schématique montrant les positions géométriques des canaux d'un raccord commutateur du type deux voies, tels que représentés par les Fig. 1, 2 et 3.

La Fig. 5 est la vue en coupe axiale d'un raccord commutateur du type deux voies réversible de forme banjo et sa vue latérale en plan;

La Fig. 6 montre en trois vues perspectives cavalières les trois positions d'indexage utiles de cet appareil. L'appareil suivant les Fig. 5 et 6 est caractérisé par le fait que ses orifices 5 et 6 peuvent indifféremment servir d'entrée ou de sortie, et que l'affectation d'un orifice au raccordement de sortie ne dépend que du sens de la rotation à 120° par rapport à la position de passage, qui en permet le vidage à l'atmosphère. A cet effet, les canaux 3 et 4 comportent chacun un groupe de deux joints 8 superposés dans des cuvettes 7 pour offrir une plus grande élasticité de compression. Dans la position de passage bidirectionnel tel que représenté par la Fig. 5 et la vue de gauche de la Fig. 6, chaque groupe de joints 8 est en appui l'un sur l'autre. Dans une position différente de celle-ci de 120° dans le sens horaire, comme le montre la Fig. 6 vue centrale, le canal 3 est en vidage par sa correspondance avec un canal 9 de la partie 2; inversement, sur la vue de droite de la Fig. 6, une rotation de 120° dans le sens anti-horaire a amené un canal 9 de vidage dans la partie I en correspondance avec le canal 4. Dans toutes les autres positions les canaux 3 et 4 sont obturés.

Un tel raccord commutateur suivant les Fig. 5 et 6 permet ainsi d'être indifféremment monté sur un appareil emetteur ou récepteur de fluide sous pression.

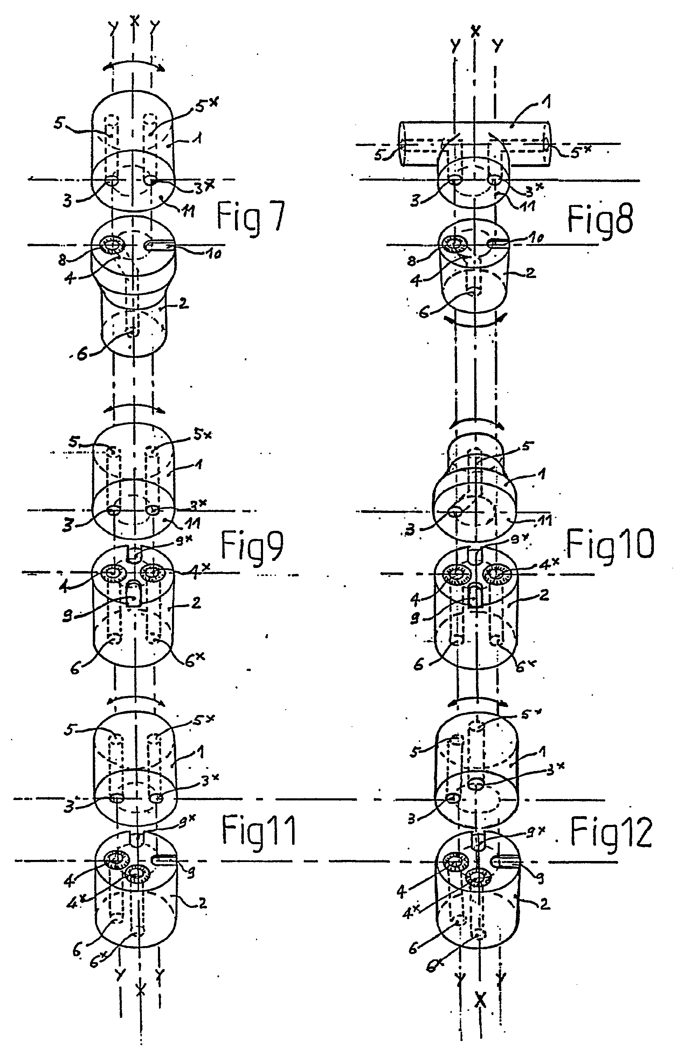

Le raccord suivant l'invention permet de remplir des fonctions plus complexes et notamment la réalisation d'appareils qui, comportant une pluralité d'entrées et de sorties, sont du type multivoies et offrent un grand choix de combinaisons de passage entrée-sortie. Les Fig. 7 à 14 sont des vues en perspective cavalière schématiques d'un certain nombre de ces raccords commutateurs décrits à titre d'exemple non limitatif.

La Fig. 7 représente schématiquement un raccord commutateur du type quatre voies à une entrée 6 et deux sorties 5 et 5 x. Les sorties 5 et 5 x débouchent dans la face de jonction II des parties I et 2 par des orifices, respectivement 3 et 3x occupant sur le cercle de rayon XY une position diamètralement opposée. Dans la partie 2, l'unique entrée 6 débouche sur la face de jonction par un canal 4 garni d'un joint torique d'étanchéité 8 ; lui est diamètralement opposé à une rainure radiale 10 de mise à l'atmosphère. Dans les positions respectives des parties 1 et 2, tel que représenté le passage bidirectionnel du fluide est établi de l'entrée 6 à la sortie 5, tandis que la sortie 5x est en liaison à l'atmosphère par la rainure 10 et un trou 9 non représenté de la jupe 13 de la partie I. Une rotation de 180° de la partie 2 établit les liaisons inverses.

La Fig. 8 représente un raccord commutateur de fonctions identiques à celui représenté par la Fig.7, mais dont les sorties 5 et 5x sont axées perpendiculairement à l'axe XX de rotation.

La Fig. 9 représente un raccord commutateur du type quatre voies à deux entrées et deux sorties permettant l'acheminement de deux veines de fluide distinctes suivant les liaisons 6-5 et 6x-5x tel que représenté, ou, dans la position différente de 180°, suivant les liaisons 6-5x et 6x-5. Dans une position différent de 90°, les sorties 5 et 5x sont en liaison à l'atmosphère par deux rainures radiales 9 et 9x diamètralement opposées sur le cercle de rayon XY et en quadrature avec les canaux d'entrée 4 et 4x.

La Fig. 10 représente un raccord commutateur du type quatre voies à deux entrées 6 et 6x et une seule sortie 5, permettant de diriger l'une ou l'autre de deux informations de pression entrantes vers un seul circuit aval.

La Fig. 11 représente un raccord commutateur à deux entrées 6 et 6x et deux sorties 5 et 5x. Les orifices 4 et 4x correspondant aux entrées 6 et 6x dans la partie 2 occupent sur le cercle de rayon XY des positions angulairement espacées de 90°, tandis que les orifices 3 et 3x correspondant aux sorties 5 et 5x dans la partie I occupent sur ce même cercle des positions diamètralement opposées. Suivant les positions relatives initiales des parties I et 2 tel que représenté la liaison de passage de l'entrée 6 à la sortie 5 est établie, la sortie 5x à l'atmosphère par la rainure radiale 9, et l'entrée 6x obturée. Par une rotation horaire de 90° on obtient la liaison 6x-5x et le vidage de la sortie 5 ; par une rotation de 90° antihoraire on obtient la liaison 6x-5 et le vidage de la sortie 5x ; enfin, par une rotation de 180° par rapport à la position initiale les liaisons inverses 6-5x et 6x-5 sont établies.

Suivant la Fig. 12 montrant un autre raccord commutateur, les orifices 4 et 4x correspondant aux entrées 6 et 6x ainsi que les orifices 3 et 3x correspondant aux sorties 5 et 5x, sont décalés de 90° sur le cercle de rayon XY. Dans les quatre positions d'indexage distantes l'une de l'autre de 90° on obtient successivement dans la position initiale telle que représentée, les liaisons 6-5 et 6x-5x ; en seconde position les liaisons 6x5, 6 obturée et 5x à l'atmosphère ; en troisième position, les entrées sont obturées et les sorties à l'atmosphère ; en quatrième position, on obtient les liaisons 6-5x, 6x obturée et 5 à l'atmosphère.

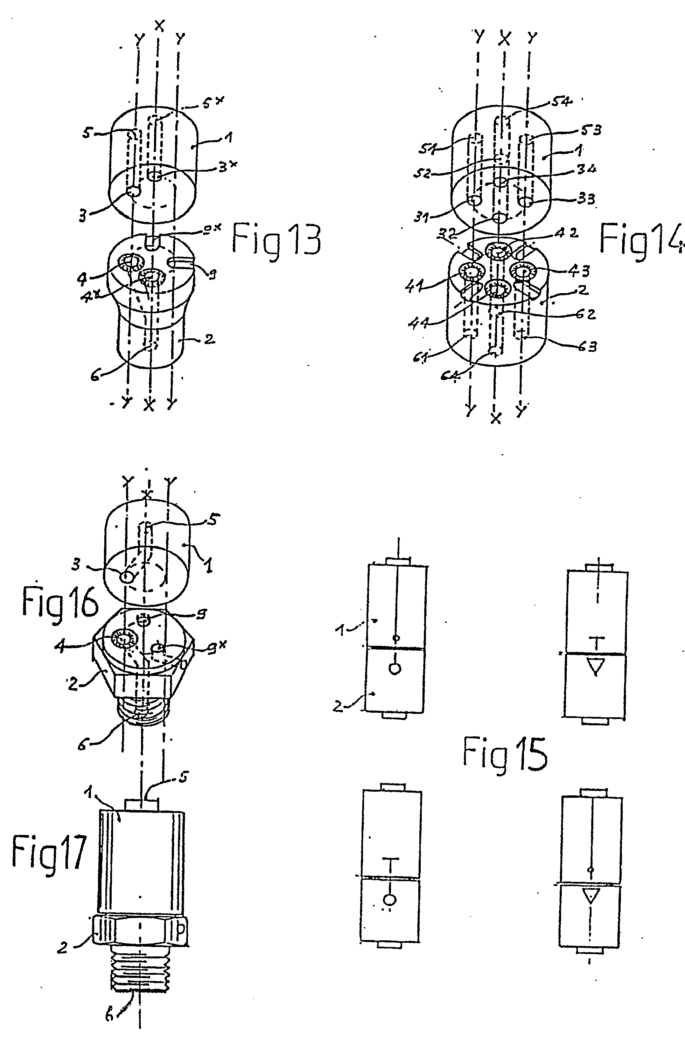

La Fig. 13 est la représentation schématique du raccord commutateur précédemment décrit suivant la Fig. 12 mais dans lequel les deux canaux 4 et 4x sont reliés à une entrée unique 6, ce qui permet à cet appareil soit d'établir les liaisons 6 vers 5 et 5x, soit d'établir la liaison 6-5 ou 6-5x, ou encore, l'entrée 6 étant obturée, d'établir 5 et 5x à l'atmosphère.

La Fig. 14 est la représentation schématique d'un raccord commutateur multivoies à quatre entrées et quatre sorties, apte à assurer quatre programmes de quatre liaisons différentes entrée-sortie à chaque indexage de rotation de 90° par rapport à la position initiale, tel que représenté, ainsi que quatre positions de vidage de toutes les sorties à chaque position à 45°.

Dans tous les raccords commutateurs précédemment décrits à l'aide des Fig. I à 14, chaque partie I et 2 comporte des orifices de raccordement de tuyauteries. L'invention permet de situer ces orifices dans une seule de ces deux parties, qui peut alors être immobilisée ; l'autre partie contenant seulement des canaux de transfert et servant de commande rotative.

Un des avantages des raccords commutateurs rotatifs selon la présente invention est d'offrir à l'utilisateur une connaissance immédiate des circuits établis, des circuit obturés et des circuits en vidage , par une vision directe de la correspondance de repères portés par chacune des parties 1 et 2.

La Fig. 15 représente quatre vues en plan d'un raccord commutateur conforme à la description qui a été faite suivant la Fig. 1. Les deux vues du haut, diamètralement opposées, montrent que la continuité de la liaison entre l'entrée et la sortie est établie, le cercle symbolique gravé sur la partie 2 désignant l'orifice d'entrée de cet appareil. Les deux vues du bas indiquent, une rotation d'indexage ayant été effectuée ; que l'orifice d'entrée est obturé, le sigle du T renversé en étant la représentation ; et que l'orifice de sortie est en liaison à l'atmosphère, par le V gravé qui en est le symbole pneumatique.

La Fig. 16 est une représentation en perspective cavalière schématique d'un raccord commutateur destiné à être vissé par le six-pans de sa partie 2 sur un organe fixe ; il est alors impossible de prévoir après vissage quelles seraient les faces de cette partie 2 s'offrant à la vue pour y graver les symboles. Afin de tourner cette difficulté, le canal d'entrée 4 ainsi que deux canaux de vidage 9 et 9x débouchent sur le cercle de rayon XY espacés entre eux d'un intervalle angulaire de 120°, l'appareil comportant de ce fait une position de passage et deux positions de vidage. La Fig. 17 est la vue en plan de ce raccord commutateur montrant les repères qui y sont gravés. Les parties 1 et 2 portent suivant leurs génératrices trois groupes de repères linéaires, chaque groupe comportant un nombre différent de lignes et espacé de l'autre de 120° La mise en correspondance d'un seul groupe visible de repérage de la partie de commande 1 et de son homologue sur la partie fixe 2 comportant le même nombre de lignes, indique que la liaison 6-5 est établie. Par contre, la mise en correspondance de repères à nombre de lignes différent, obture l'entrée 6 et met à l'atmosphère la sortie 5.

## Revendications

1. Raccord commutateur permettant d'assurer la continuité d'une ou plusieurs veines de fluide ou leur interruption avec vidage des circuits aval, ou d'assurer différentes combinaisons des circuits amont par rapport aux circuits aval, ledit raccord comportant, en liaison avec des orifices externes (5, 6) un ou plusieurs canaux d'entrée et un ou plusieurs canaux de sortie, débouchant à l'intérieur du raccord par des trous (3, 4), les trous (4) d'au moins les canaux d'entrée étant couronnés d'un joint torique (8) de matière élastique encastré dans une cuvette (7) de plus faible profondeur que l'épaisseur dudit joint, caractérisé en ce qu'il est formé de deux éléments, l'un d'entrée (2), l'autre de sortie (1), contenant respectivement lesdits orifices d'entrée (6) et de sortie (5) et lesdits canaux d'entrée et de sortie, chaque orifice externe d'au moins un desdits éléments étant équipé d'un raccord permettant la rotation axiale sans torsion de la tuyauterie qui en part ou bien d'un filetage, et les éléments (1, 2) étant assemblés de façon à pouvoir tourner l'un par rapport à l'autre par un effort musculaire autour d'un axe immatériel commun (X), en présentant deux surfaces lisses adjacentes (11) dans lesquelles se trouvent respectivement les trous (3, 4) desdits canaux d'entrée et de sortie, lesdits trous (3, 4) étant excentrés d'une même valeur radiale (X–Y) par rapport à l'axe commun (X) de rotation des éléments, de manière à établir sélectivement, par rotation de l'un des éléments par rapport à l'autre, des liaisons étanches entre orifices d'entrée (6) et orifices de sortie (5), les canaux d'entrée non reliés à un canal de sortie étant obturés par l'appui de leur joint (8) sur une zone sans trou de la surface lisse (11) de l'élément de sortie (1), et les canaux de sortie non reliés à un canal d'entrée étant à l'atmosphère à travers l'espace créé par le jeu existant entre les surfaces lisses adjacentes des deux éléments (1, 2), et/ou, dans des positions de rotation déterminées, par l'intermédiaire de rainures ou canaux radiaux (9, 10) ouverts dans ladite surface lisse adjacente de l'élément d'entrée (2).

2. Raccord commutateur selon la revendication 1, caractérisé en ce que les moyens permettant la rotation axiale sans torsion des tuyauteries à raccorder sont des cartouches (55, 56) intégrées du type à raccordement instantané.

3. Raccord commutateur selon la revendication 1 ou 2, caractérisé en ce que l'accouplement des deux éléments (1, 2) permettant leur positionnement relatif en rotation autour d'un axe immatériel commun (X) se fait par encliquetage de la jupe cylindrique femelle (13) d'un élément en matière plastique sur l'embout mâle métallique (12) de l'autre élément, l'embout mâle (12) portant une saillie circulaire à profil de crochet d'un diamètre extérieur plus élevé que le diamètre intérieur de la jupe femelle (13), ces reliefs pénétrant à force dans la matière plastique et y créant une gorge de même profil, ou se positionnant dans une gorge préalablement pratiquée.

4. Raccord commutateur selon la revendication 1 ou 2, caractérisé en ce que l'accouplement des deux éléments (1, 2) permettant leur positionnement relatif en rotation autour d'un axe immatériel commun (X) se fait par le sertissage périphérique de la jupe cylindrique (13) en métal d'un élément dans une gorge de l'embout mâle de l'autre.

5. Raccord commutateur selon la revendication 1 ou 2, caractérisé en ce que l'accouplement des deux éléments (1, 2) permettant leur positionnement relatif en rotation autour d'un axe immatériel commun (X) se fait au moyen d'une bague en matière plastique (13) dans laquelle pénètrent en force les embouts mâles cylindriques de deux éléments en matière rigide et comportant les saillies circulaires à profil de crochet.

6. Raccord commutateur selon l'une des revendications 1 à 5, caractérisé en ce que chaque élément (1, 2) comporte des repères et des graphismes symboliques gravés, indiquant par leur mise en correspondance par rotation les liaisons entrées-sorties établies, les sorties en purge à l'atmosphère et les entrées obturées.

**Patentansprüche**

1. Schaltverbindung, die die Sicherstellung des ununterbrochenen Verlaufs einer oder mehrerer Fluidströmungen oder deren Unterbrechung mit Entleerung der Leitungen strömungsabwärts oder die Sicherstellung verschiedener Kombinationen von strömungsaufwärts gelegenen Leitungen mit strömungsabwärts gelegenen Leitungen ermöglicht, wobei die Verbindung zusammen mit äußeren Öffnungen (5, 6) einen oder mehrere Einlaßkanäle und einen oder mehrere Auslaßkanäle umfaßt, die durch Löcher (3, 4) ins Innere der Verbindung münden, wobei die Löcher (4) wenigstens der Einlaßkanäle jeweils von einem O-Ring (8) aus elastischem Material eingefaßt sind und wobei der O-Ring in eine Mulde eingelassen ist, deren Tiefe geringer als die Dicke des Rings ist, dadurch gekennzeichnet, daß sie aus zwei Elementen ausgebildet ist, einem Einlaßelement (2) und einem Auslaßelement (1), die entsprechend die Einlaßöffnungen (6) und Auslaßöffnungen (5) und die Einlaß- und Auslaßkanäle umfassen, wobei jede äußere Öffnung wenigstens eines der Elemente mit einer Verbindung versehen ist, die die axiale Drehung ohne Torsion des Leitungssystems, von dem sie ein Teil ist, gestattet, oder aber mit einem Gewinde versehen ist und wobei die Elemente (1, 2) so angeordnet sind, daß das eine in bezug auf das andere durch Muskelkraft um eine gedachte gemeinsame Achse (X) gedreht werden kann, und sie zwei benachbarte glatte Oberflächen (11) aufweist, in denen sich die entsprechenden Löcher (3, 4) der Einlaß- und Auslaßkanäle befinden, wobei die Löcher (3, 4) um den gleichen radialen Wert (X–Y) in bezug auf die gemeinsame Drehachse (X) der Elemente aus dem Zentrum heraus versetzt sind, derart, daß wahlweise durch Drehung eines der Elemente in bezug auf das andere dichte Verbindungen zwischen den Einlaßöffnungen (6) und den Auslaßöffnungen (5) hergestellt werden, wobei die nicht mit einem Auslaßkanal verbundenen Einlaßkanäle durch das Aufsitzen ihres Rings (8) auf einer Zone ohne Loch in der glatten Oberfläche (11) des Auslaßelementes (1) verschlossen werden und wobei die nicht mit einem Einlaßkanal verbundenen Auslaßkanäle durch einen Zwischenraum, der durch das Spiel zwischen den benachbarten glatten Oberflächen der zwei Elemente (1, 2) entsteht, und/oder in bestimmten Drehpositionen durch dazwischen angeordnete radiale Nuten oder Kanäle (9, 10), die in der angrenzenden glatten Oberfläche des Einlaßelementes (2) offen sind, mit der Atmosphäre in Verbindung stehen.

2. Schaltverbindung gemäß Anspruch 1, dadurch gekennzeichnet, daß die Mittel, die die axiale Drehung ohne Torsion des zu verbindenden Leitungssystems gestatten, integrierte Klemmhalterungen (55, 56) vom Schnellverbindungstyp sind.

3. Schaltverbindung gemäß Anspruch 1 oder 2, dadurch gekennzeichnet, daß die Kopplung der zwei Elemente (1, 2), die deren relative Positionierung in Drehrichtung um eine gedachte gemeinsame Achse (X) gestattet, durch die Verklinkung der zylindrischen Plastik-Aufnehmermuffe (13) eines Elementes mit der Metall-Einsteckmuffe (12) des anderen Elementes ausgeführt wird, wobei die Einsteckmuffe (12) einen kreisförmigen Vorsprung mit Hakenprofil und mit einem Außendurchmesser, der größer als der Innendurchmesser der Aufnehmermuffe (13) ist, aufweist und wobei der diesen Vorsprung umfassende Teil unter Kraftaufwand in das Plastikmaterial eindringt und dort entweder eine Auskehlung von gleichem Profil erzeugt oder in einer im voraus ausgebildeten Auskehlung angeordnet wird.

4. Schaltverbindung gemäß Anspruch 1 oder 2, dadurch gekennzeichnet, daß die Kopplung der zwei Elemente (1, 2), die deren relative Positionierung in Drehrichtung um eine gedachte gemeinsame Achse (X) gestattet, durch eine periphere Quetschverbindung der zylindrischen Metall-Aufnehmermuffe (13) eines Elementes in einer Auskehlung der Einsteckmuffe des anderen Elementes ausgeführt wird.

5. Schaltverbindung gemäß Anspruch 1 oder 2, dadurch gekennzeichnet, daß die Kopplung der zwei Elemente (1, 2), die deren relative Positionierung in Drehrichtung um eine gedachte gemeinsame Achse (X) gestattet, mittels eines Plastikreifs (13) ausgeführt wird, wobei in diesen unter Kraftaufwand die zylindrischen Einsteckmuffen der zwei Elemente aus starrem Material, die die kreisförmigen Vorsprünge mit Hakenprofil aufweisen, eindringen.

6. Schaltverbindung gemäß einem der Ansprüche 1 bis 5, dadurch gekennzeichnet, daß jedes Element (1, 2) eingravierte, symbolische Markierungen und Zeichen umfaßt, die dann, wenn sie durch Drehung zueinander in Beziehung gebracht werden, die hergestellten Einlaß-/Auslaß-Verbindungen, die zur Atmosphäre geöffneten Auslässe und die verschlossenen Einlässe anzeigen.

## Claims

1. Switching connector making it possible to ensure the continuity of one or more streams of fluid or interruption thereof with drainage of the circuits downstream, or to ensure different combinations of the circuits upstream in relation to the circuits downstream, said connector comprising, in communication with external orifices (5, 6), one or more input channels and one or more output channels, opening out inside the connector into holes (3, 4), the holes (4) of at least the input channels being surmounted by an O-ring (8) of elastic material boxed in a reservoir (7) of smaller depth than the thickness of the said O-ring, characterised in that it is composed of two elements, one an input element (2), the other an output element (1), respectively containing the said input (6) and output (5) orifices and the said input and output channels, each external orifice of at least one of the said elements being fitted with a connector allowing torsion-free axial rotation of the pipe which starts therefrom or of a screw thread, and the elements (1, 2) being assembled so as to be able to turn relative to each other by a muscular force about a common non-material axis (X), exhibiting two adjacent smooth surfaces (11) in which are respectively located the holes (3, 4) of the said input and output channels, the said holes (3, 4) being offset by the same radial value (X−Y) from the common axis (X) of rotation of the elements, so as to establish selectively, by rotation of one of the elements relative to the other, sealed connections between the input orifices (6) and output orifices (5), the input channels not connected to an output channel being blocked by the application of their O-ring (8) to a hole-free zone of the smooth surface (11) of the output element (1), and the output channels not connected to an input channel communicating with the atmosphere via the space created by the clearance existing between the adjacent smooth surfaces of the two elements (1, 2), and/or, in certain rotational positions, via radial grooves or channels (9, 10) opening into the said adjacent smooth surface of the input element (2).

2. Switching connector according to claim 1, characterised in that the means allowing torsion-free axial rotation of the pipes to be connected are built-in cartridges (55, 56) of the instantaneous connection type.

3. Switching connector according to claim 1 or 2, characterised in that coupling of the two elements (1, 2) allowing their relative positioning in rotation about a common non-material axis (X) is achieved by latching of the female cylindrical skirt (13) of one element made of plastic material on the metal male end piece (12) of the other element, the male end piece (12) carrying a circular projection of hook-shaped profile with an outside diameter higher than the inside diameter of the female skirt (13), these raised portions penetrating in the plastic material in force-fitting relationship and there creating a groove of the same profile, or positioning themselves in a groove formed beforehand.

4. Switching connector according to claim 1 or 2, characterised in that coupling of the two elements (1, 2) allowing their relative positioning in rotation about a common non-material axis (X) is achieved by peripheral crimping of the metal cylindrical skirt (13) of one element in a groove of the male end piece of the other.

5. Switching connector according to claim 1 or 2, characterised in that coupling of the two elements (1, 2) allowing their relative positioning in rotation about a common non-material axis (X) is achieved by means of a ring made of plastic material (13) in which penetrate in force-fitting relationship the cylindrical male end pieces of two elements made of rigid material and comprising circular projections of hook-shaped profile.

6. Switching connector according to any of claims 1 to 5, characterised in that each element (1, 2) comprises engraved symbolic writing and markings, indicating by their coordination by rotation the input-output connections established, the outputs discharging into the atmosphere and the blocked inputs.

Fig 1

Fig 2

Fig 4

Fig 3

Fig 5

Fig 6

Fig 7

Fig 8

Fig 9

Fig 10

Fig 11

Fig 12

Fig 13

Fig 14

Fig 16

Fig 15

Fig 17